# EUROPÄISCHE PATENTSCHRIFT

(11) **EP 2 721 319 B1**
(45) Veröffentlichungstag und Bekanntmachung des Hinweises auf die Patenterteilung: **12.08.2015**
(21) Anmeldenummer: 12728188.9
(22) Anmeldetag: 14.06.2012
(51) Int. Cl.: F16F 15/26, F02B 75/06, F02B 75/04, F01L 1/344

(54) **BRENNKRAFTMASCHINE**
INTERNAL COMBUSTION ENGINE
MOTEUR A COMBUSTION INTERNE

(30) Priorität: 18.06.2011 DE 102011104531
(43) Veröffentlichungstag der Anmeldung: 23.04.2014
(73) Patentinhaber: Audi AG, 85045 Ingolstadt (DE)
(72) Erfinder: BRENDEL, Matthias, 85049 Ingolstadt (DE)
(86) Internationale Anmeldenummer: PCT/EP2012/002508
(87) Internationale Veröffentlichungsnummer: WO 2012/175177

(56) Entgegenhaltungen:
- EP-A1- 2 119 890
- EP-A2- 1 126 144
- EP-A2- 1 659 276
- WO-A1-2007/057149

## Beschreibung

Die Erfindung betrifft eine Brennkraftmaschine mit einem Mehrgelenkskurbeltrieb, wobei der Mehrgelenkskurbeltrieb eine Mehrzahl von drehbar auf Hubzapfen einer Kurbelwelle gelagerten Koppelgliedern und eine Mehrzahl von drehbar auf Hubzapfen einer Exzenterwelle gelagerten Anlenkpleueln umfasst, wobei jedes der Koppelglieder schwenkbar mit einem Kolbenpleuel eines Kolbens der Brennkraftmaschine und einem der Anlenkpleuel verbunden ist. Dokument EP 1659276 A2 offenbart eine solche Brennkraftmaschine und damit den Oberbegriff des Anspruchs 1.

Brennkraftmaschinen der eingangs genannten Art sind aus dem Stand der Technik bekannt. Sie umfassen die Exzenterwelle, die mit der Kurbelwelle über den Mehrgelenkskurbeltrieb gekoppelt ist und somit von der Brennkraftmaschine beziehungsweise der Kurbelwelle angetrieben ist. Der Mehrgelenkskurbeltrieb verfügt über eine der Anzahl der Kolben der Brennkraftmaschine entsprechende Anzahl von Koppelgliedern, die jeweils drehbar auf dem Hubzapfen der Kurbelwelle gelagert sind und zwei nach entgegengesetzten Seiten über die Kurbelwelle überstehende, an ihrem Ende jeweils mit einem Schwenkgelenk versehene Arme aufweisen. Eines der Schwenkgelenke dient zur schwenkbaren Verbindung mit dem Kolbenpleuel, der einen der Kolben der Brennkraftmaschine über das Koppelglied mit der Kurbelwelle verbindet. Ein anderes der Schwenkgelenke dient zur schwenkbaren Verbindung mit dem so genannten Anlenkpleuel, welcher mit seinem anderen Ende drehbar auf dem Hubzapfen der Exzenterwelle gelagert ist.

Ähnlich wie bei konventionellen Brennkraftmaschinen ohne eine über einen Mehrgelenkskurbeltrieb mit der Kurbelwelle gekoppelte Exzenterwelle, entstehen auch bei Brennkraftmaschinen der eingangs genannten Art Massenkräfte erster und zweiter Ordnung, die durch oszillierende Massen hervorgerufen werden und sich mit dem Kurbelwinkel der Kurbelwelle verändern. Zur Erzielung einer gewünschten Laufruhe und zur Geräuschminderung müssen diese Massenkräfte soweit wie möglich ausgeglichen werden. Während die Massenkräfte erster Ordnung durch Ausgleichsgewichte auf der Kurbelwelle mit einer bestimmten Anordnung und mit einem bestimmten Gewicht sowie einer bestimmten Kurbelwellenkröpfungsfolge ausgeglichen werden können, erfolgt der Ausgleich von Massenkräften zweiter Ordnung bei aus dem Stand der Technik bekannten Brennkraftmaschinen häufig mithilfe von zwei gegenläufig rotierenden Ausgleichswellen, die mit der doppelten Drehzahl der Kurbelwelle angetrieben werden.

Genauer gesagt werden bei sämtlichen Brennkraftmaschinen durch oszillierende Massen freie Massenkräfte erster und zweiter Ordnung verursacht, die sich mit dem Kurbelwinkel der Kurbelwelle verändern. Während Massenkräfte erster Ordnung durch die Ausgleichsgewichte auf der Kurbelwelle und die Kurbelwellenkröpfungsfolge ausgeglichen werden können, werden die freien Massenkräfte zweiter Ordnung bei bekannten Brennkraftmaschinen mit Mehrgelenkskurbeltrieb nicht vollständig ausgeglichen. Aus diesem Grund sind derartige Brennkraftmaschinen im Hinblick auf die Laufruhe beziehungsweise Laufkultur Brennkraftmaschinen ohne Mehrgelenkskurbeltrieb unterlegen, bei welchen der Ausgleich von Massenkräften zweiter Ordnung häufig mithilfe der beiden gegenläufig rotierenden Ausgleichswellen erfolgt. Diese Maßnahme lässt sich jedoch nicht ohne Weiteres auf Brennkraftmaschinen mit Mehrgelenkskurbeltrieb übertragen, da dort zum einen die entstehenden Massenkräfte nicht rein oszillierend, sondern vielmehr rotierend verlaufen, und zum anderen die Reibungsverluste des Mehrgelenkskurbeltriebs bereits an sich höher sind als die Reibungsverluste konventioneller Brennkraftmaschinen und durch die zusätzlichen Reibungsverluste einer zusätzlichen Ausgleichswelle auf ein inakzeptables Maß vergrößert würden. Auch bei Brennkraftmaschinen der eingangs genannten Art kann jedoch durch gezielte Auslegung der Ausgleichswelle ein weitreichender Ausgleich der Massenkräfte erzielt werden.

Sobald die freien Massenkräfte der Brennkraftmaschine nahezu ausgeglichen sind, erhalten die Massenmomente um die Kurbelwellenachse, das heißt in Längsrichtung der Brennkraftmaschine, großen Einfluss auf die Motorakustik. Ein Gesamtwechselmoment M_{w} der Brennkraftmaschine um die Kurbelwellenlängsachse setzt sich im Wesentlichen aus der Summe eines Gaswechselmoments M_{GW}, des Massenwechselmoments M_{MW} sowie des Ausgleichsmoments M_{A} zusammen. Bei einer Vierzylinder-Reihenbrennkraftmaschine wirken alle diese Bestandteile in der zweiten Ordnung. Das Gaswechselmoment entsteht dabei durch die tangential in die Kurbelwelle eingeleiteten Gaskräfte und ist somit das Reaktionsmoment, welches bei Abgabe eines Nutzdrehmoments der Brennkraftmaschine auf der Kurbelwelle entsteht. Das Massenwechselmoment wird durch die Abstützung der Massenkräfte des Mehrgelenkkurbeltriebs auf der Kurbelwelle generiert. Das Ausgleichsmoment resultiert bei konventionellen Mehrgelenkskurbeltrieben aus dem Höhenversatz, welcher zwischen zwei eventuell vorhandenen Ausgleichswellen vorliegt. Durch die gezielte Auslegung dieses Höhenversatzes kann das Gesamtwechselmoment in bestimmten Betriebsbereichen, also Drehzahl- und/oder Lastbereichen verringert und damit die Motorakustik verbessert werden.

Der Mehrgelenkskurbeltrieb ist vorzugsweise derart ausgebildet, dass er eine kreisähnliche Massenkraftschleife zweiter Ordnung aufweist. Diese kann in einen in Kurbelwellendrehrichtung rotierenden und einen dazu gegenläufigen Anteil aufgeteilt werden. Weist der Mehrgelenkskurbeltrieb die kreisähnliche Massenkraftschleife zweiter Ordnung auf, so ist es möglich, mit nur einer Ausgleichswelle, welche mit doppelter Kurbelwellendrehzahl rotiert, zumindest den dominanteren der beiden Teile, nämlich den in Kurbelwellendrehrichtung rotierenden, auszugleichen. Der üblicherweise erheblich kleinere, gegenläufig zur Kurbelwelle rotierende Massenkraftanteil zweiter Ordnung könnte durch eine zweite Ausgleichswelle ebenfalls vollständig ausgeglichen werden. Normalerweise weist er jedoch eine geringere Massenkraftamplitude in der zweiten Ordnung auf als ein mechanischer Ventiltrieb. Von daher kann häufig auf die zweite Ausgleichswelle verzichtet werden.

Es ist die Aufgabe der Erfindung, eine Brennkraftmaschine bereitzustellen, welche eine weiter verbesserte Motorakustik auf kostengünstige und reibungsgünstige Weise erzielt.

Dies wird erfindungsgemäß mit einer Brennkraftmaschine mit den Merkmalen des Anspruchs 1 erreicht. Dabei ist eine von der Kurbelwelle über einen Phasensteller angetriebene Ausgleichswelle vorgesehen, die zur wenigstens teilweisen Tilgung von in der Brennkraftmaschine entstehenden Massenkräften zweiter Ordnung ausgebildet ist. Wird der Mehrgelenkskurbeltrieb beziehungsweise die Brennkraftmaschine mit der Ausgleichswelle ausgestattet, so entscheidet die Absolutposition beziehungsweise Phasenlage dieser Ausgleichswelle bezogen auf die Kurbeiwellenstellung über die Entstehung und Ausprägung eines Ausgleichsmoments dieser Ausgleichswelle. Das Ausgleichsmoment wirkt analog zu dem vorstehend beschriebenen Höhenversatz der mehreren Ausgleichswellen bei aus dem Stand der Technik bekannten Brennkraftmaschinen dem Gaswechselmoment entgegen und trägt somit in bestimmten Betriebsbereichen der Brennkraftmaschine zu einer verbesserten Akustik bei. Insbesondere bei gut ausgeglichenen Massenkräften gewinnt das Gaswechselmoment starken Einfluss auf die Akustik, insbesondere den Innengeräuschpegel, und muss daher durch ein passend ausgelegtes Ausgleichsmoment in zumindest einem bestimmten Betriebsbereich minimiert werden.

Zu diesem Zweck ist der Phasensteller vorgesehen, mittels welchem ein Winkelversatz zwischen Kurbelwelle und Ausgleichswelle in einem bestimmten Winkelbereich verändert werden kann. Beispielsweise ist es möglich, den Winkelversatz in Abhängigkeit von dem Betriebspunkt der Brennkraftmaschine derart einzustellen, dass die Beschleunigung an Motorlagern der Brennkraftmaschine jeweils minimiert wird und sich folglich die Akustik der Brennkraftmaschine signifikant verbessert. Bei günstiger Wahl des Winkelversatzes zwischen Kurbelwelle und Ausgleichswelle kann die Beschleunigung in lateraler Richtung der Brennkraftmaschine an einem linken der Motorlager und an einem rechten der Motorlager insgesamt zu destruktiver Interferenz führen. Diese resultiert in einer summierten lateralen Beschleunigung über die beiden Motorlager, die erheblich kleiner ist als die Beschleunigungen an den Motorlagern selbst. Durch Änderung des Winkelversatzes zwischen Kurbelwelle und Ausgleichswelle kann bei der erfindungsgemäßen Brennkraftmaschine die Phasenlage der Beschleunigung an dem linken und dem rechten Motorlager verändert werden. Um in unterschiedlichen Betriebspunkten, das heißt bei verschiedenen Drehzahlen und Lasten, diese destruktive Interferenz, also den Auslöschungseffekt, zu maximieren, muss der Winkelversatz der Ausgleichswelle insbesondere kontinuierlich verstellt werden. Dies ist mittels des Phasenstellers möglich. Mit dem Phasensteller ist somit ein ähnlicher Effekt erzielbar, wie ein in der Praxis nicht realisierbarer variabler Höhenversatz zwischen mehreren Ausgleichswellen.

Die Ausgleichswelle der erfindungsgemäßen Brennkraftmaschine ist derart ausgebildet, dass sie die in der Brennkraftmaschine entstehenden Massenkräfte zweiter Ordnung zumindest teilweise tilgt, nämlich insbesondere einen großen Teil des in Kurbelwellendrehrichtung rotierenden Massenkraftanteils. Während bei aus dem Stand der Technik benannten Brennkraftmaschinen die Massenkräfte zweiter Ordnung nur in Richtung der Zylinderachsen wirken, was bei Reihen-Brennkraftmaschinen deren Hochachse entspricht, weist die Brennkraftmaschine, insbesondere Reihen-Brennkraftmaschine, der eingangs genannten Art, welche über den Mehrgelenkskurbeltrieb verfügt, die Massenkräfte zweiter Ordnung nicht nur in Richtung der Hochachse (1. Kraftvektor), sondern auch in Richtung einer dazu senkrechten Querachse der Brennkraftmaschine (2. Kraftvektor) auf. Die jeweilige Resultierende dieser beiden Kraftvektoren besitzt eine Amplitude, die sich im Verlauf einer Umdrehung der Kurbelwelle verändert und sich in einer zur Drehachse der Kurbelwelle senkrechten, gedachten Ebene der Brennkraftmaschine über eine Umdrehung der Kurbelwelle als eine geschlossene Kurve darstellen lässt. Diese Kurve kann je nach Anordnung und Dimensionierung der Komponenten des Mehrgelenkskurbeltriebs entweder eine langgestreckte schleifenartige Gestalt oder eine eher rundliche elliptische oder ovale bis annähernd kreisförmige Gestalt annehmen. Da im Falle einer exakt kreisförmigen Gestalt der Kurve mithilfe einer einzigen Ausgleichswelle eine vollständige Tilgung der Massenkräfte zweiter Ordnung möglich wäre, wird durch Optimierung der Auslegung der Komponenten des Mehrgelenkskurbeltriebs und der Dimensionierung beziehungsweise Kinematik des Mehrgelenkskurbeltriebs eine Kurve mit einer Gestalt angestrebt, die einem Kreis möglichst nahekommt beziehungsweise möglichst wenig von der Kreisform abweicht, wobei die Kraftvektoren zudem möglichst klein sind.

Eine Weiterbildung der Erfindung sieht vor, dass nur eine einzige Ausgleichswelle vorgesehen ist. Aus dem Stand der Technik ist es bekannt, mehrere Ausgleichswellen zu verwenden, um die Massenkräfte zweiter Ordnung im Wesentlichen vollständig zu tilgen. Jede zusätzliche Ausgleichswelle bedingt jedoch höhere Reibungsverluste gegenüber einer Brennkraftmaschine, welche nur die eine einzige Ausgleichswelle aufweist. Auf diese Weise können die Reibungsverluste unter einem bestimmten Maß gehalten werden. Zusätzlich können durch das Vorsehen der lediglich einen Ausgleichswelle der Bauraum, das Gewicht und die Kosten der Brennkraftmaschine verringert werden.

Eine Weiterbildung der Brennkraftmaschine sieht vor, dass der Phasensteller einen Verstellbereich von kleiner oder gleich 45°, insbesondere 20°, aufweist. Der Verstellbereich gibt den Winkelbereich wieder, in welchem der Winkelversatz zwischen Kurbelwelle und Ausgleichswelle einstellbar ist. Der Verstellbereich liegt also zwischen einem ersten, in einer ersten Drehrichtung maximalen Winkelversatz und einem zweiten, in einer zweiten, der ersten Richtung entgegengesetzten Drehrichtung maximalen Winkelversatz vor. Die Differenz zwischen dem zweiten und dem ersten Winkelversatz bildet somit den Verstellbereich. Dieser soll kleiner oder gleich 45° sein, insbesondere kleiner oder gleich 20°, vorzugsweise genau 20°, betragen.

Eine Weiterbildung der Erfindung sieht vor, dass der Phasensteller dazu vorgesehen ist, einen Winkelversatz zwischen Kurbelwelle und Ausgleichswelle derart einzustellen, dass ein Gaswechselmoment der Brennkraftmaschine in jedem Lastzustand zumindest teilweise, insbesondere vollständig, ausgeglichen ist. Wie bereits eingangs erwähnt, setzt sich das Gesamtwechselmoment aus dem Gaswechselmoment, dem Massenwechselmoment und dem Ausgleichsmoment zusammen, welche alle in der zweiten Ordnung wirken. Insbesondere die Verringerung des Gaswechselmoments bewirkt eine deutliche Verbesserung der Akustik der Brennkraftmaschine, weil es insbesondere bei gut ausgeglichenen Massenkräften starken Einfluss auf diese nimmt. Aus diesem Grund ist es vorteilhaft, es durch ein entsprechend ausgelegtes Ausgleichsmoment, welches mittels der Ausgleichswelle beziehungsweise durch Einstellen des Winkelversatzes erzeugbar ist, zu minimieren, vorzugsweise vollständig auszugleichen. Der Phasensteller dient nun dazu, den Winkelversatz derart einzustellen, dass das Gaswechselmoment verringert, vorzugsweise minimiert beziehungsweise vollständig ausgeglichen wird.

Eine Weiterbildung der Erfindung sieht ein Steuergerät vor, das den Phasensteller in Abhängigkeit von einem Betriebspunkt der Brennkraftmaschine einstellt. Der Betriebspunkt der Brennkraftmaschine beschreibt insbesondere die Last, welche auf die Brennkraftmaschine wirkt, und/oder ihre Drehzahl. Bei unterschiedlichen Betriebspunkten stellen sich unterschiedliche Massenkräfte ein. Es ist somit vorteilhaft, wenn der Phasensteller in Abhängigkeit von dem Betriebspunkt gesteuert und/oder geregelt wird, sodass der Winkelversatz zwischen Kurbelwelle und Ausgleichswelle entsprechend dem jeweils vorliegenden Betriebspunkt einstellbar ist. So liegt beispielsweise in einem ersten Betriebspunkt ein erster Winkelversatz und in einem zweiten Betriebspunkt ein zweiter Winkelversatz und so weiter, vor.

Eine Weiterbildung der Erfindung sieht vor, dass die Ausgleichswelle dieselbe Drehrichtung aufweist wie die Kurbelwelle. Versuche haben gezeigt, dass verbleibende, also nicht getilgte Massenkräfte zweiter Ordnung je nach Drehrichtung der Ausgleichswelle unterschiedlich hoch sein können. Bei der hier vorgestellten Brennkraftmaschine ist es vorgesehen, dass sich die Ausgleichswelle mit einer der Drehrichtung der Kurbelwelle entsprechenden Drehrichtung dreht. In diesem Fall sind die verbleibenden ungetilgten Massenkräfte zweiter Ordnung erheblich geringer als bei einer umgekehrten Drehrichtung der Ausgleichswelle.

Eine Weiterbildung der Erfindung sieht vor, dass die Ausgleichswelle über ein Ausgleichswellengetriebe von der Kurbelwelle angetrieben ist, wobei das Ausgleichswellengetriebe eine Übersetzung aufweist, bei welcher die Ausgleichswelle mit der doppelten Drehzahl der Kurbelwelle dreht. Bedingt durch die doppelte Drehzahl können mittels der Ausgleichswelle die Massenkräfte zweiter Ordnung getilgt werden. Aus diesem Grund ist es vorteilhaft, wenn die Ausgleichswelle unmittelbar von der Kurbelwelle angetrieben wird, wobei das Ausgleichswellengetriebe dazu dient, die Drehzahlumsetzung von der Drehzahl der Kurbelwelle auf die Doppelte der Kurbelwelle zu realisieren.

Eine Weiterbildung der Erfindung sieht vor, dass die Exzenterwelle über ein Exzenterwellengetriebe von der Kurbelwelle angetrieben ist, wobei das Exzenterwellengetriebe eine Übersetzung aufweist, bei welcher die Exzenterwelle mit der halben Drehzahl der Kurbelwelle dreht. Auch die Exzenterwelle wird somit von der Kurbelwelle angetrieben. Zu diesem Zweck ist das Exzenterwellengetriebe zwischen der Exzenterwelle und der Kurbelwelle vorgesehen. Die Exzenterwelle soll sich jedoch lediglich mit der halben Drehzahl der Kurbelwelle drehen. Besonders vorteilhaft ist es, wenn die Exzenterwelle und die Ausgleichswelle von der Kurbelwelle über einen gemeinsamen Zahnrad- oder Umschlingungstrieb angetrieben werden, wobei jedoch die unterschiedlichen Untersetzungs- beziehungsweise Übersetzungsverhältnisse realisiert sind. Grundsätzlich ist es jedoch auch möglich, getrennte Zahnrad- oder Umschlingungstriebe für den Antrieb der Ausgleichswelle und der Exzenterwelle zu verwenden.

Eine Weiterbildung der Erfindung sieht vor, dass die Exzenterwelle eine der Drehrichtung der Kurbelwelle entgegengesetzte Drehrichtung aufweist. Bei einer solchen Ausgestaltung kann eine verlängerte Expansion der Brennkraftmaschine realisiert werden.

Eine Weiterbildung der Erfindung sieht vor, dass ein weiterer Phasensteller zwischen der Kurbelwelle und der Exzenterwelle zur Verstellung eines Winkelversatzes zwischen Kurbelwelle und Exzenterwelle vorgesehen ist. Auf diese Weise lässt sich nicht nur eine Brennkraftmaschine realisieren, welche dank der phasenverstellbaren Ausgleichswelle eine hohe Laufruhe aufweist. Vielmehr kann zusätzlich die Hubhöhe des Kolbens der Brennkraftmaschine verstellbar sein. Insbesondere soll während des Expansions- und Ausstoßtaktes die Hubhöhe des Kolbens größer sein als während des Ansaug- und Verdichtungstaktes. Diese Hubhöhe kann jedoch mittels des Phasenstellers zwischen der Kurbelwelle und der Exzenterwelle im Wesentlichen frei innerhalb eines bestimmten Winkelbereichs gewählt sein. Vorzugsweise erfolgt die Steuerung und/oder Regelung des Phasenstellers auch hier in Abhängigkeit von dem Betriebspunkt der Brennkraftmaschine. Beispielsweise kann die Steuerung und/oder Regelung des Phasenstellers zwischen der Kurbelwelle und der Exzenterwelle mittels desselben Steuergeräts erfolgen, mit welchem der Phasensteller zwischen der Kurbelwelle und der Ausgleichswelle steuerbar und/oder regelbar ist. Insoweit kann der Winkelversatz zwischen Kurbelwelle und Exzenterwelle sowohl in Abhängigkeit von dem Betriebspunkt als auch von dem Winkelversatz zwischen Kurbelwelle und Ausgleichswelle beziehungsweise umgekehrt gewählt werden.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine perspektivische Ansicht eines Bereichs einer Brennkraftmaschine,
- Figur 2: eine perspektivische Ansicht eines Bereichs der in der Figur 1 dargestellten Brennkraftmaschine, und
- Figur 3: eine teilweise geschnittene Stirnseitenansicht des in der Figur 2 dargestellten Ausschnitts.

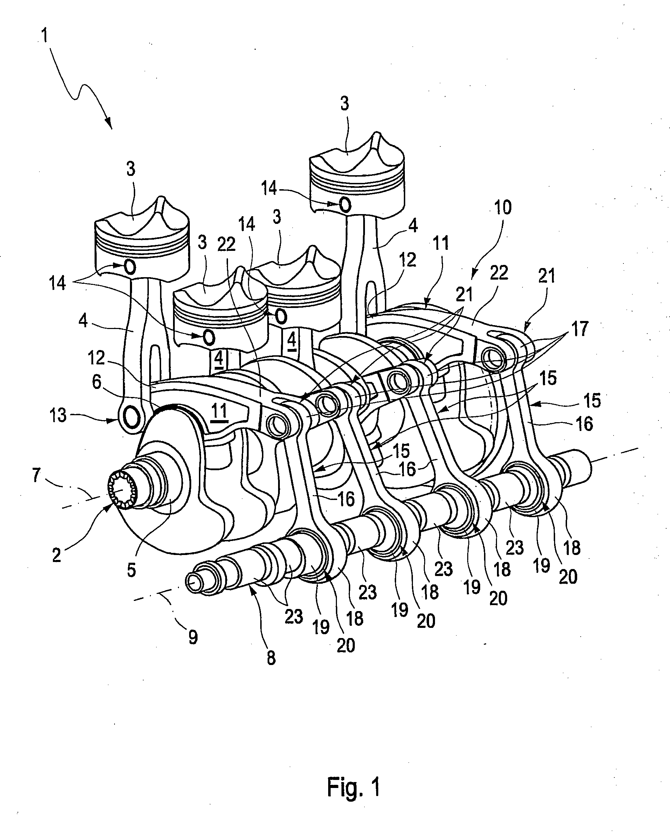

Die Figur 1 zeigt eine perspektivische Ansicht eines Bereichs einer Brennkraftmaschine 1, welche als Reihenbrennkraftmaschine, genauer als Viertakt-Vierzylinder-Reihenbrennkraftmaschine vorliegt. Die Brennkraftmaschine 1 verfügt über eine Kurbelwelle 2 und vier Kolben 3, von welchen jeder in einem von vier nicht dargestellten Zylindern der Brennkraftmaschine 1 beweglich gelagert ist. Jeder der vier Kolben 3 ist durch ein Kolbenpleuel 4 mit der Kurbelwelle 2 verbunden. Die Kurbelwelle 2 ist in hier nicht dargestellten Wellenlagern eines ebenfalls nicht dargestellten Zylinderkurbelgehäuses der Brennkraftmaschine 1 drehbar gelagert und weist fünf zur Lagerung dienende zentrische Wellenzapfen 5 sowie vier Hubzapfen 6 (von welchen in der Figur 1 jeweils nur einer sichtbar ist) auf, deren Längsmittelachsen in unterschiedlichen Winkelausrichtungen parallel zu einer Drehachse 7 der Kurbelwelle 2 versetzt sind.

Die Brennkraftmaschine 1 umfasst weiter eine Exzenterwelle 8, die eine zur Drehachse 7 der Kurbelwelle 2 parallele Drehachse 9 aufweist. Die Exzenterwelle 8 ist neben der Kurbelwelle 2 sowie etwas unterhalb von dieser im Zylinderkurbelgehäuse drehbar gelagert und über einen Mehrgelenkskurbeltrieb 10 mit der Kurbelwelle 2 gekoppelt. Neben der Kurbelwelle 2 und der Exzenterwelle 8 umfasst der Mehrgelenkskurbeltrieb 10 insgesamt vier Koppelglieder 11, die jeweils auf einem der Hubzapfen 6 der Kurbelwelle 2 drehbar gelagert sind. Jedes der Koppelglieder 11 weist einen Hubarm 12 auf, der über ein Schwenkgelenke 13 schwenkbar mit einem unteren Ende von einem der Kolbenpleuel 4 verbunden ist. Ein oberes Ende des jeweiligen Kolbenpleuels 4 ist über ein weiteres Schwenkgelenk 14 am zugehörigen Kolben 3 angelenkt.

Der Mehrgelenkskurbeltrieb 10 umfasst weiter eine Anzahl der Kolbenpleuel 4 und der Koppelglieder 11 entsprechende Anzahl von Anlenkpleueln 15. Diese sind ungefähr parallel zu den Kolbenpleueln 4 ausgerichtet und in axialer Richtung der Kurbelwelle 2 und der Exzenterwelle 8 jeweils in etwa derselben Ebene wie der dazugehörige Kolbenpleuel 4, jedoch auf der entgegengesetzten Seite der Kurbelwelle 2, angeordnet. Jeder Anlenkpleuel 15 umfasst eine Pleuelstange 16 und zwei an entgegengesetzten Enden der Pleuelstange 16 angeordnete Pleuelaugen 17 und 18, insbesondere mit unterschiedlichen Innendurchmessern. Das größere Pleuelauge 18 jedes Anlenkpleuels 15 am unteren Ende der Pleuelstange 16 umgibt einen in Bezug zur Drehachse 9 der Exzenterwelle 8 exzentrischen Hubzapfen 19 der Exzenterwelle 8, auf dem der Anlenkpleuel 15 mittels eines Drehlagers 20 drehbar gelagert ist. Das kleinere Pleuelauge 17 am oberen Ende der Pleuelstange 16 jedes Anlenkpleuels 15 bildet einen Teil eines Schwenkgelenks 21 zwischen dem Anlenkpleuel 15 und einem längeren Koppelarm 22 des benachbarten Koppelglieds 11, der auf der zum Hubarm 12 entgegengesetzten Seite der Kurbelwelle 2 über diese übersteht.

Die Exzenterwelle 8 weist zwischen benachbarten exzentrischen Hubzapfen 19 sowie an ihren Stirnenden zur Lagerung der Exenterwelle 8 in Wellenlagern dienende, zur Drehachse 10 koaxiale Wellenabschnitte 23 auf. Abgesehen von einer variablen Verdichtung kann durch die zuvor beschriebene Anordnung auch die Neigung der Kolbenpleuel 4 in Bezug zur Zylinderachse der zugehörigen Zylinder während der Drehung der Kurbelwelle 2 verringert werden, was zu einer Verringerung der Kolbenseitenkräfte und damit der Reibkräfte zwischen den Kolben 2 und Zylinderwänden der Zylinder führt.

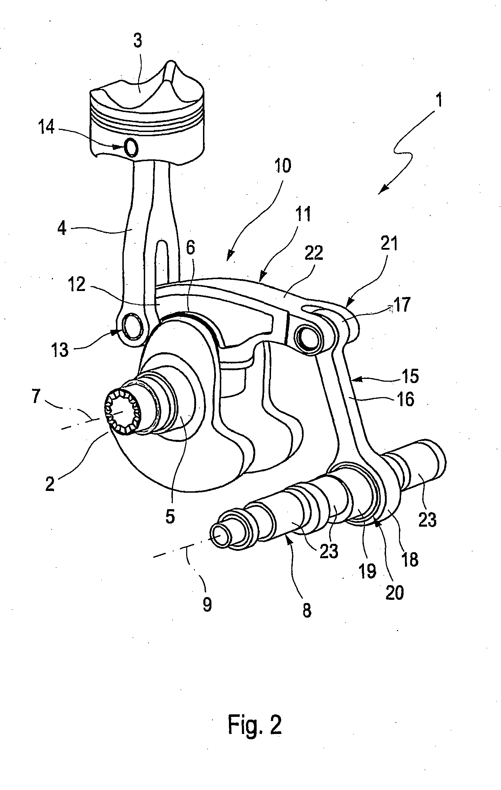

Die Figur 2 zeigt eine perspektivische Ansicht eines Ausschnitts der anhand der Figur 1 vorgestellten Brennkraftmaschine 1. Die Ausführung der Brennkraftmaschine 1 entspricht der bereits erläuterten, sodass insoweit auf die vorstehenden Ausführungen verwiesen wird.

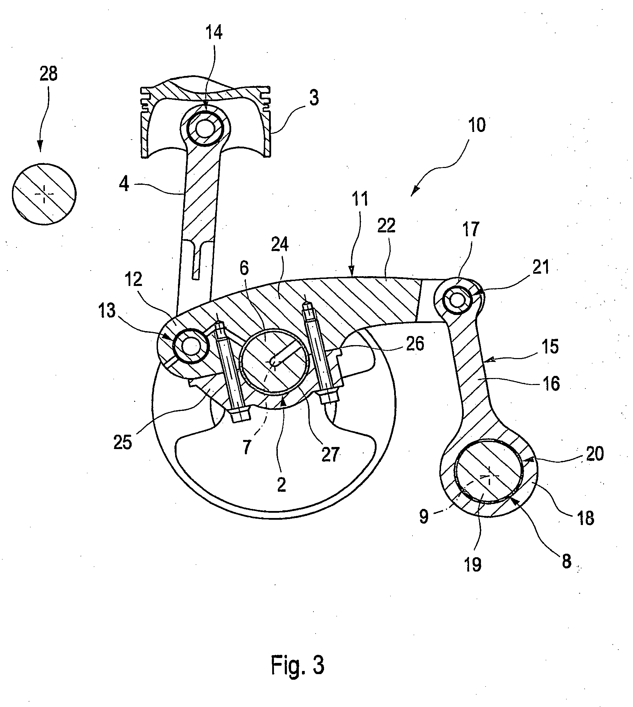

Die Figur 3 zeigt eine teilweise geschnittene Stirnseitenansicht des aus der Figur 2 bekannten Ausschnitts. Es ist ohne Weiteres erkennbar, dass das abgebildete Koppelglied 11 aus einem Oberteil 24 und einem Unterteil 25 besteht, wobei das Oberteil 24 und das Unterteil 25 entlang einer Trennebene 26 gegeneinander anliegen und jeweils angrenzend an der Trennebene 26 mit einer halbzylindrischen Ausnehmung zur Aufnahme des Hubzapfens 6 sowie von zwei den Hubzapfen 6 umgebenden Lagerschalen eines zwischen dem Hubzapfen 6 und dem Koppelglied 11 angeordneten Gleitlagers 27 versehen sind. Das Oberteil 24 und das Unterteil 25 jedes Koppelglieds 8 werden von zwei Schrauben zusammengehalten.

Wie auch bei anderen Brennkraftmaschinen treten bei der hier vorgestellten Brennkraftmaschine 1 durch die oszillierenden Massen der Kolben 3, der Kolbenpleuel 4, der Koppelglieder 11 und der Anlenkpleuel 15 freie Massenkräfte auf, die so weit wie möglich ausgeglichen werden sollten, um die Laufruhe und die Akustik der Brennkraftmaschine 1 zu verbessern. Diese freien Massenkräfte umfassen in erster Linie Massenkräfte erster Ordnung und Massenkräfte zweiter Ordnung. Erstere können durch nicht dargestellte Ausgleichsgewichte auf der Kurbelwelle 2 und deren Kröpfungsfolge ausgeglichen werden. Zur Tilgung der Massenkräfte zweiter Ordnung dient eine mit hier nicht dargestellten Ausgleichsgewichten versehene Ausgleichswelle 28. Diese ist beispielsweise oberhalb und seitlich versetzt zu der Kurbelwelle 2 im Zylinderkurbelgehäuse der Brennkraftmaschine 1 drehbar gelagert und wird von der Kurbelwelle 2 über ein nicht dargestelltes Übersetzungsgetriebe mit der doppelten Drehzahl der Kurbelwelle 2 und mit einer der Drehrichtung der Kurbelwelle 2 entsprechenden Drehrichtung angetrieben.

Zwischen der Kurbelwelle 2 und der Ausgleichswelle 28 ist ein nicht abgebildeter Phasensteller vorgesehen, über welchen die Kurbelwelle 2 die Ausgleichswelle 28 antreibt. Mittels des Phasenstellers kann ein Winkelversatz zwischen der Kurbelwelle 2 und der Ausgleichswelle 28 eingestellt werden. Dies erfolgt insbesondere steuernd und/oder regelnd derart, dass ein Massenmoment zweiter Ordnung, insbesondere ein Gaswechselmoment der Brennkraftmaschine 1 wenigstens teilweise, vorzugsweise jedoch vollständig, ausgeglichen wird. Zu diesem Zweck weist der Phasensteller beispielsweise einen Verstellbereich von 20° auf. Es kann jedoch auch ein beliebiger anderer Verstellbereich, beispielsweise zwischen 0° und 45°, realisiert sein. Insbesondere ist in der Brennkraftmaschine 1 lediglich eine einzige Ausgleichswelle 28 vorgesehen. Die Ausgleichswelle 28 ist dabei zur wenigstens teilweisen Tilgung von in der Brennkraftmaschine 1 entstehenden Massenkräften zweiter Ordnung ausgebildet. Der Phasensteller wird bevorzugt durch ein Steuergerät steuernd und/oder regelnd eingestellt. Mittels des Steuergeräts kann demnach ein beliebiger Winkelversatz zwischen der Kurbelwelle 2 und der Ausgleichswelle 28 gewählt werden. Dies ist bevorzugt in Abhängigkeit von einem Betriebspunkt der Brennkraftmaschine 1 vorgesehen. Besonders vorteilhaft ist es, wenn zwischen der Kurbelwelle 2 und der Exzenterwelle 8 zur Verstellung eines Winkelversatzes zwischen diesen ein weiterer, nicht dargestellter Phasensteller vorgesehen ist.

### BEZUGSZEICHENLISTE

- 1: Brennkraftmaschine
- 2: Kurbelwelle
- 3: Kolben
- 4: Kolbenpleuel
- 5: Wellenzapfen
- 6: Hubzapfen
- 7: Drehachse
- 8: Exzenterwelle
- 9: Drehachse
- 10: Mehrgelenkskurbeltrieb
- 11: Koppelglied
- 12: Hubarm
- 13: Schwenkgelenk
- 14: Schwenkgelenk
- 15: Anlenkpleuel
- 16: Pleuelstange
- 17: Pleuelstange
- 18: Pleuelstange
- 19: Hubzapfen
- 20: Drehlager
- 21: Schwenkgelenk
- 22: Koppelarm
- 23: Wellenabschnitt
- 24: Oberteil
- 25: Unterteil
- 26: Trennebene
- 27: Gleitlager
- 28: Ausgleichswelle

## Patentansprüche

1. Brennkraftmaschine (1) mit einem Mehrgelenkskurbeltrieb (10), wobei der Mehrgelenkskurbeltrieb (10) eine Mehrzahl von drehbar auf Hubzapfen (6) einer Kurbelwelle (2) gelagerten Koppelgliedern (11) und eine Mehrzahl von drehbar auf Hubzapfen (19) einer Exzenterwelle (8) gelagerten Anlenkpleuel (15) umfasst, wobei jedes der Koppelglieder (11) schwenkbar mit einem Kolbenpleuel (4) eines Kolbens (3) der Brennkraftmaschine (1) und einem der Anlenkpleuel (15) verbunden ist, **gekennzeichnet durch** eine von der Kurbelwelle (2) über einen Phasensteller angetriebene Ausgleichswelle (28), die zur wenigstens teilweisen Tilgung von in der Brennkraftmaschine (1) entstehenden Massenkräften zweiter Ordnung ausgebildet ist.

2. Brennkraftmaschine nach Anspruch 1, **dadurch gekennzeichnet, dass** nur eine einzige Ausgleichswelle (28) vorgesehen ist.

3. Brennkraftmaschine nach einem der vorhergehenden Ansprüche, **dadurch gekennzeichnet, dass** der Phasensteller (28) einen Verstellbereich von kleiner oder gleich 45°, insbesondere 20°, aufweist.

4. Brennkraftmaschine nach einem der vorhergehenden Ansprüche, **dadurch gekennzeichnet, dass** der Phasensteller (28) dazu vorgesehen ist, einen Winkelversatz zwischen Kurbelwelle (2) und Ausgleichswelle (28) derart einzustellen, dass ein Gaswechselmoment der Brennkraftmaschine (1) in jedem Lastzustand zumindest teilweise, insbesondere vollständig, ausgeglichen ist.

5. Brennkraftmaschine nach einem der vorhergehenden Ansprüche, **gekennzeichnet durch** ein Steuergerät, das den Phasensteller in Abhängigkeit von einem Betriebspunkt der Brennkraftmaschine (1) einstellt.

6. Brennkraftmaschine nach einem der vorhergehenden Ansprüche, **dadurch gekennzeichnet, dass** die Ausgleichswelle (28) dieselbe Drehrichtung aufweist wie die Kurbelwelle (2).

7. Brennkraftmaschine nach einem der vorhergehenden Ansprüche, **dadurch gekennzeichnet, dass** die Ausgleichswelle (28) über ein Ausgleichswellengetriebe von der Kurbelwelle (2) angetrieben ist, wobei das Ausgleichswellengetriebe eine Übersetzung aufweist, bei welcher die Ausgleichswelle (28) mit der doppelten Drehzahl der Kurbelwelle (2) dreht.

8. Brennkraftmaschine nach einem der vorhergehenden Ansprüche, **dadurch gekennzeichnet, dass** die Exzenterwelle (8) über ein Exzenterwellengetriebe von der Kurbelwelle (2) angetrieben ist, wobei das Exzenterwellengetriebe eine Übersetzung aufweist, bei welcher die Exzenterwelle (8) mit der halben Drehzahl der Kurbelwelle (2) dreht.

9. Brennkraftmaschine nach einem der vorhergehenden Ansprüche, **dadurch gekennzeichnet, dass** die Exzenterwelle (8) eine der Drehrichtung der Kurbelwelle (2) entgegengesetzte Drehrichtung aufweist.

10. Brennkraftmaschine nach einem der vorhergehenden Ansprüche, **dadurch gekennzeichnet, dass** ein weiterer Phasensteller, zwischen der Kurbelwelle (2) und der Exzenterwelle (8) zur Verstellung eines Winkelversatzes zwischen Kurbelwelle (2) und Exzenterwelle (8) vorgesehen ist.

## Claims

1. Internal combustion engine (1) comprising a multi-link crankshaft drive (10), the multi-link crankshaft drive (10) comprising a plurality of coupling elements (11) rotatably mounted on crankpins (6) of a crankshaft (2) and a plurality of articulated connecting rods (15) rotatably mounted on crankpins (19) of an eccentric shaft (8), each of the coupling elements (11) being pivotally connected to a piston connecting rod (4) of a piston (3) of the internal combustion engine (1) and to one of the articulated connecting rods (15), **characterised by** a balancer shaft (28) which is driven by the crankshaft (2) via a phase adjuster and is configured to at least partially eliminate second-order inertia forces ensuing in the internal combustion engine (1).

2. Internal combustion engine according to claim 1, **characterised in that** only a single balancer shaft (28) is provided.

3. Internal combustion engine according to any of the preceding claims, **characterised in that** the phase adjuster (28) has an adjustment range of less than or equal to 45°, in particular 20°.

4. Internal combustion engine according to any of the preceding claims, **characterised in that** the phase adjuster (28) is provided to adjust an angular offset between the crankshaft (2) and the balancer shaft (28) such that a gas exchange torque of the internal combustion engine (1) is compensated at least in part, in particular completely, under any load condition.

5. Internal combustion engine according to any of the preceding claims, **characterised by** a control device which adjusts the phase adjuster on the basis of an operating point of the internal combustion engine (1).

6. Internal combustion engine according to any of the preceding claims, **characterised in that** the balancer shaft (28) rotates in the same direction of rotation as the crankshaft (2).

7. Internal combustion engine according to any of the preceding claims, **characterised in that** the balancer shaft (28) is driven by the crankshaft (2) via a balancer shaft transmission, the balancer shaft transmission having a transmission ratio such that the balancer shaft (28) rotates at twice the speed of the crankshaft (2).

8. Internal combustion engine according to any of the preceding claims, **characterised in that** the eccentric shaft (8) is driven by the crankshaft (2) via an eccentric shaft transmission, the eccentric shaft transmission having a transmission ratio such that the eccentric shaft (8) rotates at half the speed of the crankshaft (2).

9. Internal combustion engine according to any of the preceding claims, **characterised in that** the eccentric shaft (8) rotates in a direction of rotation counter to the direction of rotation of the crankshaft (2).

10. Internal combustion engine according to any of the preceding claims, **characterised in that** an additional phase adjuster is provided between the crankshaft (2) and the eccentric shaft (8) for adjusting an angular offset between the crankshaft (2) and the eccentric shaft (8).

## Revendications

1. Moteur à combustion interne (1) comprenant une transmission à manivelle à articulations multiples (10), dans lequel la transmission à manivelle à articulations multiples (10) comprend une pluralité d'éléments de couplage (11) montés à rotation sur des manetons de levage (6) d'un vilebrequin (2) et une pluralité de biellettes articulées (15) montées à rotation sur des manetons de levage (19) d'un arbre à excentrique (19), dans lequel chacun des éléments de couplage (11) est relié à pivotement à une biellette articulée (4) d'un piston (3) du moteur à combustion interne (1) et à l'une des biellettes articulées (15), **caractérisé par** un arbre de compensation (28) entraîné par le vilebrequin (2) via un régulateur de phase, lequel arbre est conçu pour l'amortissement au moins partiel de forces inertielles de second ordre produites dans le moteur à combustion interne (1).

2. Moteur à combustion interne selon la revendication 1, **caractérisé en ce qu'**il est prévu seulement un arbre de compensation (28).

3. Moteur à combustion interne selon l'une quelconque des revendications précédentes, **caractérisé en ce que** le régulateur de phase (28) présente une plage de réglage inférieure ou égale à 45°, en particulier de 20°.

4. Moteur à combustion interne selon l'une quelconque des revendications précédentes, **caractérisé en ce que** le régulateur de phase (28) est prévu de manière à régler un déplacement angulaire entre le vilebrequin (2) et l'arbre de compensation (28) de sorte qu'un couple d'échange gazeux du moteur à combustion interne (1) soit compensé à chaque état de charge au moins en partie, en particulier totalement.

5. Moteur à combustion interne selon l'une quelconque des revendications précédentes, **caractérisé par** un appareil de commande qui règle le régulateur de phase en fonction d'un point de fonctionnement du moteur à combustion interne (1).

6. Moteur à combustion interne selon l'une quelconque des revendications précédentes, **caractérisé en ce que** l'arbre de compensation (28) présente le même sens de rotation que le vilebrequin (2).

7. Moteur à combustion interne selon l'une quelconque des revendications précédentes, **caractérisé en ce que** l'arbre de compensation (28) est entraîné par le vilebrequin (2) via une transmission de l'arbre de compensation, dans lequel la transmission de l'arbre de compensation présente un engrenage, dans lequel l'arbre de compensation (28) tourne à une vitesse de rotation double de celle du vilebrequin (2).

8. Moteur à combustion interne selon l'une quelconque des revendications précédentes, **caractérisé en ce que** l'arbre à excentrique (8) est entraîné par le vilebrequin (2) via la transmission de l'arbre à excentrique, dans lequel la transmission de l'arbre à excentrique présente un engrenage, dans lequel l'arbre à excentrique (8) tourne à une vitesse de rotation qui est la moitié de celle du vilebrequin (2).

9. Moteur à combustion interne selon l'une quelconque des revendications précédentes, **caractérisé en ce que** l'arbre à excentrique (8) présente un sens de rotation opposé au sens de rotation du vilebrequin (2).

10. Moteur à combustion interne selon l'une quelconque des revendications précédentes, **caractérisé en ce qu'**un autre régulateur de phase est prévu entre le vilebrequin (2) et l'arbre à excentrique (8) pour régler un déplacement angulaire entre le vilebrequin (2) et l'arbre à excentrique (8).
